(19) Europäisches Patentamt
European Patent Office
Office européen des brevets

(11) **EP 4 144 004 B1**

(12) **EUROPEAN PATENT SPECIFICATION**

(45) Date of publication and mention
of the grant of the patent:
**15.07.2026 Bulletin 2026/29**

(51) International Patent Classification (IPC):
**H04L 1/00** $^{(2006.01)}$

(52) Cooperative Patent Classification (CPC):
**H04L 1/0067; H04L 1/0041;** H04L 1/0057

(21) Application number: **20723063.2**

(22) Date of filing: **28.04.2020**

(86) International application number:
**PCT/EP2020/061690**

(87) International publication number:
**WO 2021/219197 (04.11.2021 Gazette 2021/44)**

(54) **SIGNAL PROCESSING FOR DIFFERENT RESOURCE UNIT ALLOCATIONS**

SIGNALVERARBEITUNG FÜR VERSCHIEDENE RESSOURCENEINHEITSZUWEISUNGEN

TRAITEMENT DE SIGNAL POUR DIFFÉRENTES ATTRIBUTIONS D'UNITÉ DE RESSOURCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.03.2023 Bulletin 2023/10**

(73) Proprietor: **Telefonaktiebolaget LM ERICSSON
(PUBL)
16483 Stockholm (SE)**

(72) Inventors:
• **AMBEDE, Abhishek
141 58 Huddinge (SE)**

• **SUNDMAN, Dennis
191 47 Sollentuna (SE)**
• **LOPEZ, Miguel
170 69 Solna (SE)**

(74) Representative: **Ericsson
Patent Development
Torshamnsgatan 21-23
164 80 Stockholm (SE)**

(56) References cited:
**EP-A1- 3 748 883        WO-A1-2017/075227
WO-A1-2017/122240**

**Description**

**TECHNICAL FIELD**

The present disclosure relates generally to the field of wireless communication. More particularly, it relates to signal processing for different resource unit allocations in wireless communication.

**BACKGROUND**

The IEEE 802.11ax High Efficiency (HE) standard and the IEEE 802.11be Extremely High Throughput (EHT) standard involve an allocation entity referred to as a resource unit (RU). An RU is typically associated with (e.g., defined by) a group of sub-carriers for transmission. The number of sub-carriers may be seen as a size of an RU.

There are seven different RU sizes defined. According to IEEE 802.11ax HE, only a single RU can be allocated to a single station (STA). According to IEEE 802.11be EHT, multiple RU:s can be allocated to a single STA.

Further details regarding IEEE 802.11ax HE may be acquired from Hongyuan Zang, et al., "HE PHY Padding and Packet Extension", doc.:IEEE 802.11-15/0810, September 2015.

It would be beneficial to be able to use the same, or similar, signal processing for IEEE 802.11ax HE and IEEE 802.11be EHT (in the transmitter and/or in the receiver). For example, hardware and/or software blocks configured for IEEE 802.11ax HE processing could then be reused for IEEE 802.11be EHT processing.

Therefore, there is a need for approaches to signal processing that accommodates both IEEE 802.11ax HE and IEEE 802.11be EHT.

It is known from WO 2017122240 A1 about a transmission method comprising generating a transmission signal that includes a legacy preamble, a non-legacy preamble, a data field and a packet extension field. The non-legacy preamble comprises a first signal field and a second signal field, the second signal field comprising a common field that carries RU assignment information for one or more terminal stations and a user-specific field that carries per-user allocation information for the one or more terminal stations.

It is also known from WO 2017075227 A1 about an apparatus configured to provide wireless communication. The apparatus includes a memory that stores instructions, and a processor coupled with the memory and configured to execute the instructions to select a dual sub-carrier modulation (DCM) mode or a non-DCM mode.

It is also known from EP 3748883 A1, relevant to Art. 54(3) EPC, about assigning multiple resource units, RUs, to a single wireless station using an aggregated Multi-RU, "virtual resource unit" or "vRU", that aggregates multiple RUs. The parameters of the virtual RU can be calculated according to existing standards such the padding schemes and RUs, defined in IEEE 802.11ax.

**SUMMARY**

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like. It is an object of some embodiments to solve or mitigate, alleviate, or eliminate at least some disadvantages of the prior art.

A first aspect is a method for a wireless transmitter device configured for orthogonal frequency division multiplexing (OFDM) transmission to a wireless receiver device using one or more allocated resource unit (RU), wherein each RU is defined by a group of sub-carriers for transmission and associated with a constituent encoding padding parameter $N_{SD,short,i}$ assigned to the RU, wherein the one or more allocated RU:s is comprised in a punctured bandwidth.

The method comprises providing information regarding the one or more allocated RU:s by signaling to the wireless receiver device. The method comprises determining an overall encoding padding parameter $N_{SD,short}$. the wireless receiver device, the overall encoding padding parameter $N_{SD,short}$ is determined as the constituent encoding padding parameter of the allocated RU $N_{SD,short,i}$. one RU:s are allocated for transmission to the wireless receiver device, the overall encoding padding parameter $N_{SD,short}$ is determined as a sum of the constituent encoding padding parameters of the allocated RU:s, $\sum_{i=1}^{r} N_{SD,short,i}$ .

The method also comprises generating, based on the determined overall encoding padding parameter $N_{SD,short}$, a physical layer data packet for transmission to the wireless receiver device in the allocated RU:s.

In some embodiments, generating the physical layer data packet comprises data encoding with pre-padding and/or post-padding for one or more OFDM symbols of the physical layer data packet, wherein the determined overall encoding padding parameter is applied in the pre-padding and/or the post-padding.

In some embodiments, the one or more OFDM symbols comprise a number of last OFDM symbols of the physical layer data packet.

In some embodiments, an amount of padding for the one or more OFDM symbols is defined by the determined overall encoding padding parameter.

In some embodiments, the method further comprises dividing the one or more OFDM symbols into a plurality of segments based on the determined overall encoding padding parameter.

In some embodiments - when the plurality of segments is less than a maximum number of segments - a number of bits after encoding in each of the one or more OFDM symbols is equal to a product of the plurality of segments, the determined overall encoding padding parameter, a number of spatial streams, and a number of encoded bits per sub-carrier per spatial stream.

In some embodiments, the transmission to a wireless receiver device using one or more RU is in accordance with an extremely high throughput scheme, and/or the constituent encoding padding parameter of at least one (e.g., one, some, or each) RU is defined in accordance with a high efficiency scheme. The high efficiency (HE) scheme is as specified by IEEE 802.11ax and/or the extremely high throughput (EHT) scheme is as specified by IEEE 802.11be.

In some embodiments, the constituent encoding padding parameter is based on a number of sub-carriers of the corresponding RU.

A second aspect is a method for a wireless receiver device configured for orthogonal frequency division multiplexing (OFDM) reception from a transmitter receiver device using one or more allocated resource unit (RU), wherein each RU is defined by a group of sub-carriers for transmission and associated with a constituent encoding padding parameter $N_{SD,short,i}$ assigned to the RU, wherein the one or more allocated RU:s is comprised in a punctured bandwidth.

The method comprises acquiring information regarding the one or more allocated RU:s by signaling from the wireless transmitter device. The method comprises determining an overall encoding padding parameter $N_{SD,short}$. the wireless receiver device, the overall encoding padding parameter $N_{SD,short}$ is determined as the constituent encoding padding parameter of the allocated RU $N_{SD,short,i}$ one RU:s are allocated for transmission to the wireless receiver device, the overall encoding padding parameter $N_{SD,short}$ is determined as a sum of the constituent encoding padding parameters of the allocated RU:s, $\sum_{i=1}^{r} N_{SD,short,i}$.

The method also comprises decoding, based on the determined overall encoding padding parameter $N_{SD,short}$, in the allocated RU:s.

A third aspect is an apparatus for a wireless transmitter device configured for orthogonal frequency division multiplexing (OFDM) transmission to a wireless receiver device using one or more allocated resource unit (RU), wherein each RU is defined by a group of sub-carriers for transmission and associated with a constituent encoding padding parameter $N_{SD,short,i}$ assigned to the RU, wherein the one or more allocated RU:s is comprised in a punctured bandwidth. The apparatus comprises controlling circuitry.

The controlling circuitry is configured to cause provision of information regarding the one or more allocated RU:s by signaling to the wireless receiver device and determination of an overall encoding padding parameter $N_{SD,short}$. $N_{SD,short}$ is determined as the constituent encoding padding parameter $N_{SD,short,i}$ of the allocated RU responsive to exactly one RU being allocated for transmission to the wireless receiver device. The overall encoding padding parameter $N_{SD,short}$ is determined as a sum of the constituent encoding padding parameters of the allocated RU:s, $\sum_{i=1}^{r} N_{SD,short,i}$, responsive to more than one RU:s being allocated for transmission to the wireless receiver device.

The controlling circuitry is also configured to cause generation, based on the determined overall encoding padding parameter $N_{SD,short}$, of a physical layer data packet for transmission to the wireless receiver device in the allocated RU(s).

A fourth aspect is an apparatus for a wireless receiver device configured for orthogonal frequency division multiplexing (OFDM) reception from a transmitter receiver device using one or more allocated resource unit (RU), wherein each RU is is defined by a group of sub-carriers for transmission and associated with a constituent encoding padding parameter $N_{SD,short}$ for the one or more allocated RU, wherein the one or more allocated RU:s is comprised in a punctured bandwidth. The apparatus comprises controlling circuitry.

The controlling circuitry is configured to cause acquisition of information regarding the one or more allocated RU:s by signaling from the wireless transmitter device and determination of an overall encoding padding parameter $N_{SD,short}$. $N_{SD,short}$ is determined as the constituent encoding padding parameter of the allocated RU responsive to exactly one RU being allocated for transmission to the wireless receiver device. The overall encoding padding parameter $N_{SD,short}$ is determined as a sum of the constituent encoding padding parameters of the allocated RU:s, $\sum_{i=1}^{r} N_{SD,short,i}$, when more than one RU:s are allocated for transmission to the wireless receiver device.

The controlling circuitry is also configured to cause decoding, based on the determined overall encoding padding parameter $N_{SD,short}$, of a physical layer data packet received from the wireless transmitter device in the allocated RU(s).

In some embodiments, any of the above aspects may additionally have features identical with or corresponding to any of the various features as explained above for any of the other aspects.

An advantage of some embodiments is that approaches are provided for signal processing that accommodates both IEEE 802.11ax HE and IEEE 802.11be EHT.

An advantage of some embodiments is that the same, or similar, signal processing may be used for transmission and/or reception according to IEEE 802.11ax HE and IEEE 802.11be EHT.

An advantage of some embodiments is that hardware and/or software blocks configured for IEEE 802.11ax HE processing can be reused for IEEE 802.11be EHT processing.

An advantage of some embodiments is that approaches are provided for determining and using encoding padding parameters for resource unit allocations of different sizes.

An advantage of some embodiments is that approaches are provided for determining and using encoding padding parameters for resource unit allocations comprising two or more (e.g., aggregated) resource units.

An advantage of some embodiments is that the approaches are forward compatible in the sense that they can accommodate new RU sizes and/or new RU combinations in future standardizations.

## BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.

Figure 1 is a combined flowchart and signaling diagram illustrating example method steps and signaling according to some embodiments;

Figure 2 is a schematic drawing illustrating an example time-frequency allocation according to some embodiments;

Figure 3 is a schematic block diagram illustrating an example apparatus according to some embodiments;

Figure 4 is a schematic block diagram illustrating an example apparatus according to some embodiments; and

Figure 5 is a schematic drawing illustrating an example computer readable medium according to some embodiments.

## DETAILED DESCRIPTION

As already mentioned above, it should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In the following, embodiments will be described where approaches are provided for encoding padding parameters for resource unit allocations comprising two or more (e.g., aggregated) resource units. Some embodiments are particularly suitable for signal processing according to IEEE 802.11ax HE (referred to in the following as HE) and/or for signal processing according to IEEE 802.11be EHT (referred to in the following as EHT).

It should be noted that, even if problems and/or solutions are described herein in the context of IEEE 802.11ax HE and IEEE 802.11be EHT, this is not intended as limiting. Contrarily, some embodiments may be equally applicable in other wireless communication contexts (e.g., IEEE 802.11 communication other than HE/EHT, Third Generation Partnership Project - 3GPP - communication, etc.) where an encoding padding parameter is applicable for signal processing, and where the encoding padding parameter can differ depending on a resource unit allocation.

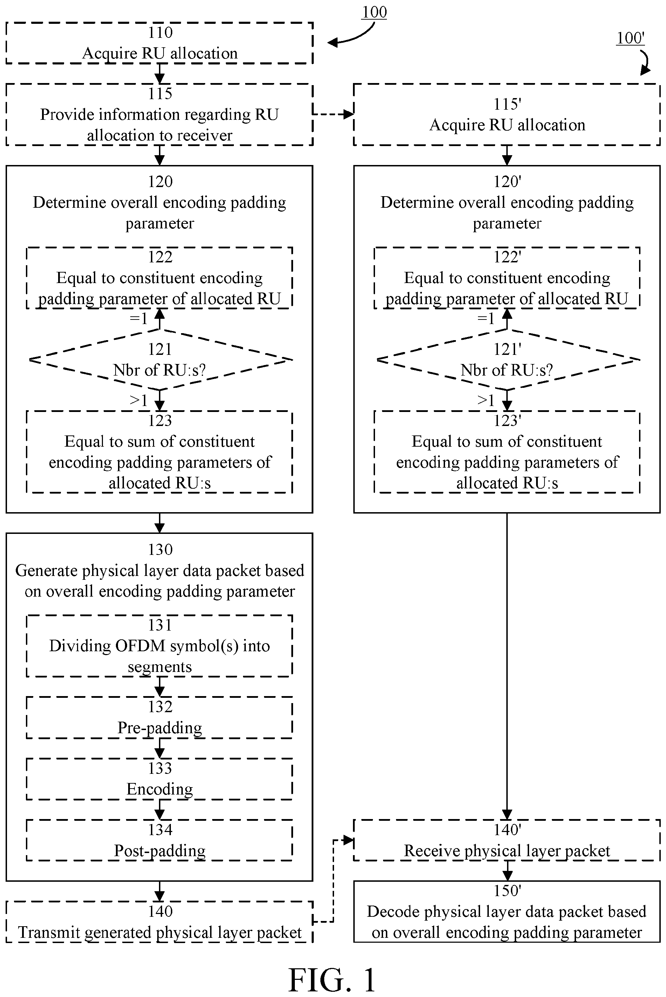

Figure 1 illustrates an example method 100 for a wireless transmitter device and an example method 100' wireless receiver device according to some embodiments. Figure 1 also illustrates example signaling from the wireless transmitter device to the wireless receiver device.

The method 100 is for a wireless transmitter device configured for orthogonal frequency division multiplexing

(OFDM) transmission to a wireless receiver device using one or more allocated resource unit (RU).

The one or more allocated RU may be a single RU (i.e., exactly one RU) or two or more (i.e., more than one) RS:s. When two or more RU:s are allocated, they may be aggregated RU:s and/or punctured RU:s.

Each RU is associated with a constituent encoding padding parameter. For example, the constituent encoding parameter may be defined based on a number of sub-carriers of the RU. The number of sub-carriers of the RU may be seen as a size of the RU.

For example, the OFDM transmission and the RU allocation may be in accordance with EHT. Alternatively or additionally, the constituent encoding padding parameter of at least one (e.g., one, some, or each) RU may be defined in accordance with HE. For example, the constituent encoding padding parameter for an $i^{th}$ RU may be the parameter $N_{SD,short,i}$.

As illustrated by optional step 110, the method may commence by acquiring the RU allocation (i.e., knowledge regarding which RU(s) are allocated for transmission to the wireless receiver device). Acquiring the RU allocation may, for example, comprise receiving an indication of the RU allocation and/or determining the RU allocation.

As illustrated by optional step 115, the method may comprise providing (e.g., transmitting) information regarding the RU allocation to the wireless receiver device. For example, the provision may be achieved by signaling in PHY (e.g., using one of the signaling, SIG, fields) or in the medium access control, MAC, layer (e.g., using an RU allocation subfield in a trigger frame). The information regarding the RU allocation may be any suitable information (e.g., an index identifying which RU(s) are allocated).

In step 120, an overall encoding padding parameter is determined for the RU allocation. When the OFDM transmission and the RU allocation is in accordance with EHT, the overall encoding padding parameter for an RU allocation may be the parameter $N_{SD,short}$.

As illustrated by optional sub-step 121, the determination of the overall encoding padding parameter be based on the number of allocated RU:s.

When exactly one RU is allocated for transmission to the wireless receiver device ("=1"-path out of 121), the overall encoding padding parameter is equal to the constituent encoding padding parameter of the allocated RU as illustrated by optional sub-step 122. This corresponds to $N_{SD,short} = N_{SD,short,i}$ when the OFDM transmission and the RU allocation is in accordance with EHT and the constituent encoding padding parameter is, for example, defined in accordance with HE.

When more than one RU:s are allocated for transmission to the wireless receiver device (">1"-path out of 121), the overall encoding padding parameter is equal to the sum of the constituent encoding padding parameters of (all of) the allocated RU:s as illustrated by optional sub-step 123. When the OFDM transmission and the RU allocation is in accordance with EHT and the constituent encoding padding parameter is, for example, defined in accordance with HE, this corresponds to $N_{SD,short} = E_{i\in\psi} N_{SD,short,i}$, RU:s.

In step 130, a physical layer data packet is generated based on the determined overall encoding padding parameter. The physical layer data packet may, for example, be a physical layer, PHY, protocol data unit (PPDU).

When the OFDM transmission and the RU allocation is in accordance with EHT and the constituent encoding padding parameter is, for example, defined in accordance with HE, the generation of step 130 may be in accordance to HE procedures. This has the advantage that hardware and/or software configured for generation of a physical layer data packet for OFDM transmission in accordance with HE, may be used directly for generation of a physical layer data packet for OFDM transmission in accordance with EHT.

In some embodiments, generating the physical layer data packet in step 130 comprises data encoding (e.g., error correction encoding, such as forward error correction, FEC, encoding and/or low density parity check, LDPC, encoding) with pre-padding and/or post-padding (e.g., in the form of rate matching) for one or more OFDM symbols of the physical layer data packet, as illustrated by optional sub-steps 132, 133, 134. The determined overall encoding padding parameter may be applied in the pre-padding and/or the post-padding.

For example, an amount of padding for the one or more OFDM symbols may be defined by the determined overall encoding padding parameter. The amount of padding may be based on a number of encoded bits for the one or more OFDM symbols.

In some embodiments, pre-padding comprises adding default pre-padding content for the one or more OFDM symbols (e.g., to provide the number of encoded bits). Alternatively or additionally, post-padding may comprise adding default post-padding content for the one or more OFDM symbols (e.g., to fill up the one or more OFDM symbols).

When the OFDM transmission and the RU allocation is in accordance with EHT and one or more of the constituent encoding padding parameters is, for example, defined in accordance with HE, the generation of step 130 may comprise data encoding with pre-padding and/or post-padding in accordance to HE procedures, using the determined overall encoding padding parameter $N_{SD,short}$ regardless of the number of allocated RU:s.

The one or more OFDM symbols may comprise (e.g., consist of) a number of last OFDM symbols of the physical layer data packet. When the OFDM transmission and the RU allocation is in accordance with EHT, the one or more OFDM symbols may be the last $m_{STBC}$ OFDM symbols of the physical layer data packet.

In some embodiments, generating the physical layer data packet in step 130 comprises dividing the one or more OFDM symbols into a plurality of segments based on the determined overall encoding padding parameter, as illustrated by optional sub-step 131.

In the generated physical layer data packet, each segment comprises encoded data only, or encoded pre-padded data, or default post-padding content. Pre-padding may comprise filling up segments that are only partially filled by data before encoding. Such segments may be filled up with default pre-padding content (e.g., default bits, such as, all-zero bits or all-one-bits). Post-padding may comprise filling segments that are empty after encoding. Such segments may be filled up with the default post-padding content (e.g., default bits, such as, all-zero bits or all-one-bits).

When the OFDM transmission and the RU allocation is in accordance with EHT, the division into the plurality of segments may also be based on the parameter $a$ (which may be seen as a pre-padding parameter). For example, there may be $a$ segments in the plurality of segments.

When the plurality of segments is less than a maximum number of segments (e.g., $a < 4$), the number of bits after encoding $N_{CBPs,last}$ in each of the one or more OFDM symbols may be equal to a product of the number of segments $a$, the determined overall encoding padding parameter $N_{SD,short}$, the number of spatial streams $N_{SS}$, sub-carrier per spatial stream $N_{BPSCS}$.

When the plurality of segments is equal to a maximum number of segments (e.g., $a = 4$), the number of bits after encoding $N_{CBPs,last}$ in each of the one or more OFDM symbols may be equal to the number of bits after encoding $N_{CBPS}$ in each of the other OFDM symbols.

As illustrated by optional step 140, the method may comprise transmitting the physical layer data packet to the wireless receiver device in the allocated RU(s). It should be noted that the physical layer packet may be transmitted for reception by the wireless reception device only (single user, SU, transmission) or the physical layer packet may be transmitter for reception by the wireless reception device as well as one or more other wireless reception devices (multiuser, MU, transmission).

The corresponding method 100' is for a wireless receiver device configured for orthogonal frequency division multiplexing (OFDM) reception from a wireless transmitter device using one or more allocated resource unit (RU).

The one or more allocated RU may be a single RU (i.e., exactly one RU) or two or more (i.e., more than one) RS:s. When two or more RU:s are allocated, they may be aggregated RU:s and/or punctured RU:s.

Each RU is associated with a constituent encoding padding parameter. For example, the constituent encoding padding parameter may be defined based on a number of sub-carriers of the RU. The number of sub-carriers of the RU may be seen as a size of the RU.

For example, the OFDM transmission and the RU allocation may be in accordance with EHT. Alternatively or additionally, the constituent encoding padding parameter of at least one (e.g., one, some, or each) RU may be defined in accordance with HE. For example, the constituent encoding padding parameter for an $i^{th}$ RU may be the parameter $N_{SD,short,i}$.

As illustrated by optional step 115', the method may comprise acquiring (e.g., receiving) information regarding the RU allocation from the wireless transmitter device. For example, the acquisition may be achieved by signaling in PHY (e.g., using one of the signaling, SIG, fields) or in the medium access control, MAC, layer (e.g., using an RU allocation subfield in a trigger frame). The information regarding the RU allocation may be any suitable information (e.g., an index identifying which RU(s) are allocated).

In step 120', an overall encoding padding parameter is determined for the RU allocation. When the OFDM transmission and the RU allocation is in accordance with EHT, the overall encoding padding parameter for an RU allocation may be the parameter $N_{SD,short}$.

As illustrated by optional sub-step 121', the determination of the overall encoding padding parameter be based on the number of allocated RU:s.

When exactly one RU is allocated for transmission to the wireless receiver device ("=1"-path out of 121'), the overall encoding padding parameter is equal to the constituent encoding padding parameter of the allocated RU as illustrated by optional sub-step 122'. This corresponds to $N_{SD,short} = N_{SD,short,i}$ when the OFDM transmission and the RU allocation is in accordance with EHT and the constituent encoding padding parameter is, for example, defined in accordance with HE.

When more than one RU:s are allocated for transmission to the wireless receiver device (">1"-path out of 121'), the overall encoding padding parameter is equal to the sum of the constituent encoding padding parameters of (all of) the allocated RU:s as illustrated by optional sub-step 123'. When the OFDM transmission and the RU allocation is in accordance with EHT and the constituent encoding padding parameter is, for example, defined in accordance with HE, this corresponds to $N_{SD,short} = \Sigma_{i \in \Psi} N_{SD,short,i}$, where $\Psi$ represents the collection of allocated RU:s.

As illustrated by optional step 140', the method may comprise receiving a physical layer data packet from the wireless transmitter device in the allocated RU(s). The physical layer data packet may, for example, be a physical layer, PHY, protocol data unit (PPDU).

In step 150', a physical layer data packet received from the wireless transmitter device in the allocated RU(s) is decoded based on the determined overall encoding padding parameter.

When the OFDM transmission and the RU allocation is in accordance with EHT and the constituent encoding padding parameter is, for example, defined in accordance with HE, the decoding of step 150' may be in accordance to HE procedures. This has the advantage that hardware and/or software configured for decoding of a physical layer data packet for OFDM transmission in accordance with HE, may be used directly for decoding of a physical layer data packet for OFDM transmission in accordance with EHT.

In some embodiments, decoding the physical layer data packet in step 150' comprises data decoding (e.g., error correction decoding, such as forward error correction, FEC, decoding and/or low density parity check, LDPC, decoding) with removal of pre-padding and/or post-padding (e.g., in the form of de-rate matching) for one or more OFDM symbols of the physical layer data packet (e.g., counterparts of 132, 133, 134). The determined overall encoding padding parameter may be applied in the removal of pre-padding and/or post-padding.

Some elaboration on the example context of IEEE 802.11ax HE and IEEE 802.11be EHT will now be given as an illustration for application of the method 100 and/or the method 100'.

The IEEE 802.11ax HE standard involves an allocation unit called a resource unit (RU) defined by a group of sub-carriers for transmission. The number of sub-carriers may be seen as the size of the RU. There are seven different RU sizes defined in HE, and only a single RU can be allocated to a single station (STA). Thus, single user (SU) transmissions in HE utilize a single RU.

The steps involved in the generation of the data field in the physical layer (PHY) protocol data unit (PPDU) for HE refer to a set of parameters. The values of at least one of these parameters depend on the size of the allocated RU (e.g., the parameter $N_{SD,short}$ - number of data sub-carriers per frequency segment short, and the parameter $D_{TM}$ - low density parity check, LDPC, tone mapping distance).

In HE, the values of $N_{SD,short}$ may be defined by the following table, where DCM=0 refers to Dual Carrier Modulation not being used and DCM=1 refers to Dual Carrier Modulation being used.

| RU Size | $N_{SD,short}$ | |
|---|---|---|
| | DCM=0 | DCM=1 |
| 26-tone | 6 | 2 |
| 52-tone | 12 | 6 |
| 106-tone | 24 | 12 |
| 242-tone | 60 | 30 |
| 484-tone | 120 | 60 |
| 996-tone | 240 | 120 |
| 2×996-tone | 492 | 246 |

There are some different transmitter block diagrams related to data field generation of an HE SU PPDU with LDPC encoding. Since only one RU can be allocated to a single STA in HE, these transmitter block diagrams refer to generation of a data field corresponding to a single RU. Generation of an HE MU PPDU re-uses the HE SU PPDU generation processes.

According to the IEEE 802.11be EHT standard, a single RU or multiple RU:s (RU aggregation) can be allocated to a single STA. Furthermore, bandwidth puncturing patterns are defined in EHT, wherein RU:s on different sides of a punctured bandwidth portion can be allocated to a single STA. Thus, EHT supports larger bandwidths and more RU allocation possibilities than HE. The HE tone (sub-carrier) plans for different RU sizes are re-used for EHT. There is only one PHY service data unit (PSDU) per STA for each link in EHT. Forward error correction (FEC) encoding in EHT uses LDPC codes, and each PSDU only uses one encoder.

Going from HE to EHT, there is a need to design new transmitter chains (or modify the existing, HE, transmitter chains) to support the generation of data fields that involve multiple RU:s for a single STA in EHT transmissions (for SU and/or MU, as well as for punctured and/or non-punctured bandwidth).

The transmitter block diagrams for HE (i.e., single-RU) PPDU data field generation and the corresponding steps involved in the encoding processes do not support generation of EHT multi-RU PPDU data fields (with or without puncturing) to be transmitted to a single STA in a SU or MU transmission. Some embodiments enable modifications thereto by defining values for the parameter $N_{SD,short}$ corresponding to the various multi-RU transmission scenarios in EHT.

The pre-FEC padding and post-FEC padding processes in the transmitter chain of HE SU PPDU data field generation perform padding of the PSDU such that the resulting number of bits completely fill up the orthogonal frequency division multiplexing (OFDM) symbols to be transmitted. The pre-FEC padding and post-FEC padding processes involve

$N_{SD,short}$, have seven different values in HE; one value for each of the different RU sizes.

By defining values of $N_{SD,short}$ for the new scenarios of EHT (multi-RU single STA transmissions; with or without puncturing), the pre-FEC padding and post-FEC padding processes can be performed for EHT (for single-RU and multi-RU single STA transmissions; with or without puncturing) in similarity to how they are performed for HE. As already mentioned, the values of $N_{SD,short}$ for aggregated RU transmissions (multi-RU single STA transmissions; with or without puncturing) may be obtained by summing the values of the parameter corresponding to each allocated RU of the aggregation (compare with 123, 123' of Figure 1).

In an HE PPDU, all the data OFDM symbols have the same number, $N_{SD}$, except for the last $m_{STBC}$ OFDM symbols. A two-step padding method (pre-FEC padding and post-FEC padding; compare with 132 and 134 of Figure 1) is employed to pad the last $m_{STBC}$ OFDM symbols in HE. The FEC padding (pre-padding and post-padding) is used in HE to match the number of encoded bits at the output of the LDPC encoder with the number of bits that are needed to modulate all the data sub-carriers in all the OFDM symbols and all space-time streams. The encoded bits are mapped to the space-time layers, and to each OFDM symbol; with the exception of the last $m_{STBC}$ OFDM symbols. The last $m_{STBC}$ OFDM symbols differs from the other, previous, OFDM data symbols in that some of their sub-carriers may carry un-encoded padding bits. When space-time block codes (STBC) are not used, $m_{STBC} = m_{STBC} = 2$ when STBC are used.

The padding for HE may be summarized as follows: There are $a \in [1,2,3,4]$ pre-FEC padding segment boundaries defined in the last $m_{STBC}$ OFDM symbols. Depending on the number of information bits, pre-FEC padding bits are added before LDPC encoding of the information bits to fill up the encoder input up to the nearest segment boundary. After LDPC encoding, post-FEC padding bits are added to fill up the last $m_{STBC}$ OFDM symbols. Thus, the pre-FEC padding bits are encoded (and need to be decoded at a receiver), while the post-FEC padding bits are un-encoded (and need not be decoded at the receiver). Hence, the presence of post-FEC padding may be utilized by the receiver; entailing extra time for decoding of the PPDU.

As a reference for the HE padding, a basic approach may comprise splitting the last OFDM symbol(s) into $a$ segments of equal size, adding pre-FEC padding bits until an integer number of segments are filled up with bits for encoding, and filling any remaining segment(s) with post-FEC padding bits.

However, due to practical constraints that require an integer number of bits and tones, it is not possible to make the segments have equal size, so the values of $N_{SD,short}$ are applied in HE to provide a compromise relating to the basic approach above. Specifically, for a segment boundary $a < 4$, all the information bits and all the pre-FEC padding bits carried in the last $m_{STBC}$ OFDM symbols can be mapped to $a$ $N_{SD,short}$ tones. Moreover, $N_{SD,short}$ is applicable to determine the number, $N_{CBPS,short}$, $m_{STBC}$ OFDM symbols; from which the number, $N_{CBPS,last}$, $m_{STBC}$ OFDM symbols may be determined. Furthermore, $N_{SD,Short}$ is also applicable to determine the number of pre-FEC padding bits, the number of post-FEC padding bits, and the total number of OFDM symbols in the PPDU.

As already mentioned, it may be desirable to re-use as much as possible from the HE generation process (e.g., LDPC encoding with rate matching provided by pre-padding and/or post-padding) in EHT. The HE LDPC encoder supports seven different RU sizes and modulation orders BPSK (binary shift keying), QPSK (quadrature phase shift keying), 16-QAM (quadrature amplitude modulation), 64-QAM, 256-QAM and 1024-QAM. For EHT, more (aggregated) RU sizes, more RU combinations, an additional modulation order (4096-QAM), and more space-time streams (up to 16) need to be accommodated. Thus, defining pre-FEC padding and post-FEC padding for aggregated RU scenarios may enable application of HE procedures for EHT.

It may be observed that EHT only defines RU allocations that arise from combining RU allocations supported for HE. Thus, the number, $N_{SD}$, an SU PPDU or a MU PPDU) may be expressed as $N_{SD} = \sum_{i=1}^{r} N_{SD,i}$, where r denotes the number of aggregated RU:s - indexed by i - and $N_{SD,i}$ denotes the number of data sub-carriers in the $i^{th}$ RU, and where each of the aggregated RU:s is supported by the HE LDPC encoder and pre/post FEC padding. Based on this observation, some embodiments propose an approach for pre-FEC padding and post-FEC padding in EHT, that re-uses the already standardized approach for pre-FEC padding and post-FEC padding in HE.

As understood, $N_{SD,short}$ may be seen as an initiating parameter used during generation of the data field in an HE PPDU. It is typically used in pre-FEC padding to compute values of parameters that are used to determine the initial excess factor $a_{init}$ (the initial value of the number of segments filled by encoded bits) and the amount of pre-FEC padding.

Application of $N_{SD,short}$ to multi-RU aggregation (e.g., as in EHT) and/or to new RU sizes is enabled, according to some embodiments, by determining the $N_{SD,short}$ value for such cases as a sum of the $N_{SD,Short}$ values, $N_{SD,short,i}$,

$$N_{SD,short} = \sum_{i=1}^{r} N_{SD,short,i} = \sum_{i \in \Psi} N_{SD,short,i}$$, where r denotes the number of aggregated RU:s - indexed by

$i$, $N_{SD,short,i}$ denotes the value of $N_{SD,Short}$ for the $i^{th}$ RU, and $\Psi$ represents the collection of allocated RU:s.

Thus, in some embodiments, a number of tones, $N_{SD,short,i}$, $N_{SD,i}$, $m_{STBC}$ OFDM symbols in the PPDU can be mapped to $N_{SD,short,i}$ tones, and - to each "composite" RU size, $N_{SD}$ - parameter, $N_{SD,short}$, $N_{SD,short,i}$, the component "basic" RU sizes of the "composite" RU, such that the number of encoded bits per OFDM symbol in the last $m_{STBC}$ OFDM symbols in the PPDU depends on the encoding padding parameter $N_{SD,short}$.

Typically, for each "composite" RU size, the number, $N_{CBPS,last}$, $m_{STBC}$ OFDM symbols in the PPDU may be equal to the product of $N_{SD,short}$, $N_{SS}$, -time streams, the number, $N_{BPSCS}$, number, $a$, of segments (i.e., $N_{CBPS,last} = a$ $N_{SD,short} N_{SS} N_{BPSCS}$), when $a < 4$, and $N_{CBPS,last} = N_{CBPS}$ when $a = 4$. The number of post-FEC padding bits may be equal to the difference between the total number of coded bits per OFDM symbol and $N_{CBPs,last}$.

An example of a new table of values for $N_{SD,short}$, generation for EHT multi-RU single STA PPDU (with or without puncturing) is presented in the following table.

| | RU Size | $N_{SD,short}$ | |
|---|---|---|---|
| | | DCM=0 | DCM=1 |
| Defined for HE, duplicated for EHT | 26-tone | 6 | 2 |
| | 52-tone | 12 | 6 |
| | 106-tone | 24 | 12 |
| | 242-tone | 60 | 30 |
| | 484-tone | 120 | 60 |
| | 996-tone | 240 | 120 |
| | 2×996-tone | 492 | 246 |
| New for EHT | 52-tone RU + 26-tone RU | 18 | 8 |
| | 106-tone RU + 26-tone RU | 30 | 14 |
| | 484-tone + 242-tone | 180 | 90 |
| | 996-tone + 484-tone | 360 | 180 |
| | 996-tone + 484-tone + 242-tone | 420 | 210 |
| | 996-tone + 996-tone | 480 | 240 |
| | 996-tone + 996-tone + 484-tone | 600 | 300 |
| | 996-tone + 996-tone + 996-tone | 720 | 360 |
| | 996-tone + 996-tone + 996-tone + 484-tone | 840 | 420 |
| | 2×996-tone + 484-tone | 612 | 306 |
| | 2×996-tone + 996-tone | 732 | 366 |
| | 2×996-tone + 996-tone + 484-tone | 852 | 426 |

It should be understood that the determination of values of $N_{SD,short}$ is not limited to the scenarios listed in the table above. Contrarily, similar determinations may be equally applicable for any multi-RU aggregation scenario.

When values for $N_{SD,short}$ have been determined, pre-FEC padding and post-FEC padding may proceed as specified for HE.

Generally, the values for $N_{SD,short}$ may typically be determined off-line and tabulated for later use, or may be determined during operation.

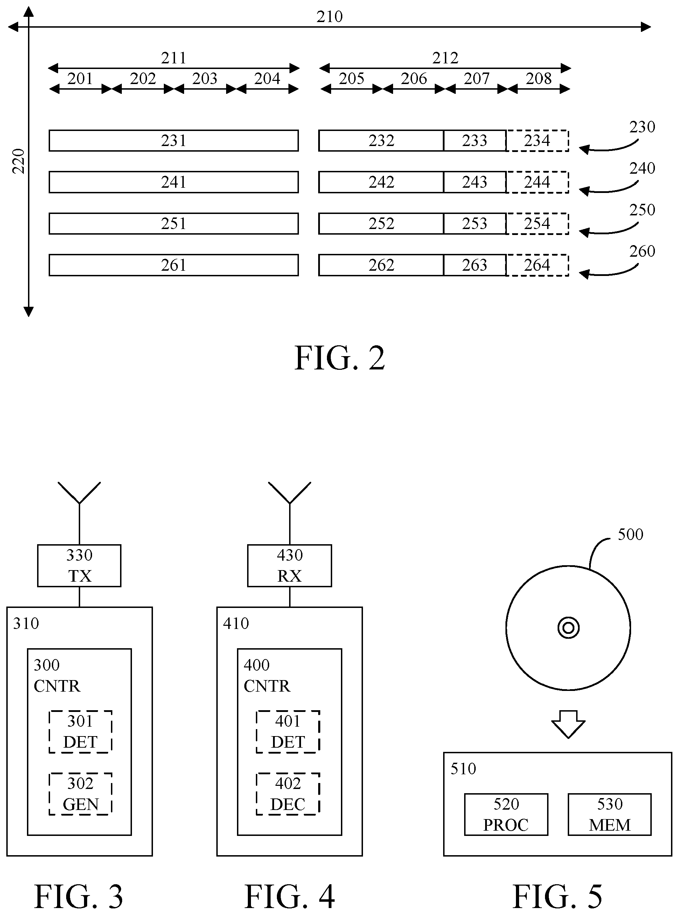

Figure 2 schematically illustrates an example time-frequency allocation which serves as an application example for some embodiments. In Figure 2, the axis 210 represents frequency (data sub-carriers) and the axis 220 represents time (OFDM symbols). Four OFDM symbols 230, 240, 250, 260 are illustrated in a punctured aggregated RU allocation.

Two 80 MHz bandwidth frequency segments are illustrated as 211 and 212, each comprising four 20 MHz bandwidth portions 201, 202, 203, 204 and 205, 206, 207, 208. The allocated RU:s in this example are a 996-tone RU 231, 241, 251, 261, a 484-tone RU 232, 242, 252, 262, and a 242-tone RU 233, 243, 253, 263, while the 242-tone RU 234, 244, 254, 264 is punctured.

For example, Figure 2 may be seen as illustrating a 160 MHz EHT SU PPDU data field with one edge 242-tone RU punctured.

Since multiple RU:s are aggregated to construct the data field in the example of Figure 2, the value $N_{SD} = N_{SD,996} + N_{SD,484} + N_{SD,242}$ may be used to compute the different parameters for data field generation. Similarly, $N_{SD,short}$ may be determined as:

$$N_{SD,short} = N_{SD,short,996} + N_{SD,short,484} + N_{SD,short,242} = 240 + 120 + 60 = 420$$

e.g., by reading the value 420 directly from the EHT table above, or by reading the values 240, 120 and 60 from the HE table.

Figure 3 schematically illustrates an example apparatus 310 according to some embodiments. The apparatus 310 is for a wireless transmitter device configured for orthogonal frequency division multiplexing (OFDM) transmission to a wireless receiver device using one or more allocated resource unit (RU).

The apparatus 310 may be partially or completely comprisable (e.g., comprised) in a wireless transmission device (e.g., a IEEE 802.11 station, STA, or access point, AP). Alternatively or additionally, the apparatus 310 may be configured to cause performance of (e.g., configured to perform) one or more of the steps described for method 100 of Figure 1.

The one or more allocated RU may be a single RU (i.e., exactly one RU) or two or more (i.e., more than one) RS:s. When two or more RU:s are allocated, they may be aggregated RU:s and/or punctured RU:s.

Each RU is associated with a constituent encoding padding parameter.

The apparatus 310 comprises a controller (CNTR; e.g., controlling circuitry or a control module) 300.

The controller is configured to cause determination of an overall encoding padding parameter as the constituent encoding padding parameter of the allocated RU responsive to exactly one RU being allocated for transmission to the wireless receiver device, and as a sum of the constituent encoding padding parameters of the allocated RU:s responsive to more than one RU:s being allocated for transmission to the wireless receiver device (compare with step 120 of Figure 1).

To this end, the controller may comprise, or be otherwise associated with (e.g., connected, or connectable, to) a determiner (DET; e.g., determining circuitry or a determination module) 301. The determiner 301 may be configured to determine the overall encoding padding parameter as described above.

The controller is also configured to cause generation, based on the determined overall encoding padding parameter, of a physical layer data packet for transmission to the wireless receiver device in the allocated RU(s) (compare with step 130 of Figure 1).

To this end, the controller may comprise, or be otherwise associated with (e.g., connected, or connectable, to) a generator (GEN; e.g., generating circuitry or a generation module) 302. The generator 302 may be configured to generate the physical layer data packet as described above.

As already mentioned, generation of the physical layer data packet may comprise data encoding with pre-padding and/or post-padding for one or more OFDM symbols of the physical layer data packet, wherein the determined overall encoding padding parameter is applied in the pre-padding and/or the post-padding.

The controller may be further configured to cause provision of information regarding the one or more allocated RU to the wireless receiver device (compare with step 115 of Figure 1) and/or to cause transmission of the physical layer data packet to the wireless receiver device in the allocated RU(s) (compare with step 140 of Figure 1).

To this end, the controller may comprise, or be otherwise associated with (e.g., connected, or connectable, to) a transmitter (TX; e.g., transmitting circuitry or a transmission module) 330. The transmitter 330 may be configured to provide the information regarding the one or more allocated RU to the wireless receiver device as described above and/or to transmit the physical layer data packet to the wireless receiver device as described above.

Figure 4 schematically illustrates an example apparatus 410 according to some embodiments. The apparatus 410 is for a wireless receiver device configured for orthogonal frequency division multiplexing (OFDM) reception from a wireless transmitter device using one or more allocated resource unit (RU).

The apparatus 410 may be partially or completely comprisable (e.g., comprised) in a wireless receiver device (e.g., a IEEE 802.11 station, STA, or access point, AP). Alternatively or additionally, the apparatus 410 may be configured to cause performance of (e.g., configured to perform) one or more of the steps described for method 100' of Figure 1.

The one or more allocated RU may be a single RU (i.e., exactly one RU) or two or more (i.e., more than one) RS:s. When two or more RU:s are allocated, they may be aggregated RU:s and/or punctured RU:s.

Each RU is associated with a constituent encoding padding parameter.

The apparatus 410 comprises a controller (CNTR; e.g., controlling circuitry or a control module) 400.

The controller is configured to cause determination of an overall encoding padding parameter as the constituent encoding padding parameter of the allocated RU responsive to exactly one RU being allocated for transmission to the wireless receiver device, and as a sum of the constituent encoding padding parameters of the allocated RU:s responsive to more than one RU:s being allocated for transmission to the wireless receiver device (compare with step 120' of Figure 1).

To this end, the controller may comprise, or be otherwise associated with (e.g., connected, or connectable, to) a determiner (DET; e.g., determining circuitry or a determination module) 401. The determiner 401 may be configured to determine the overall encoding padding parameter as described above.

The controller is also configured to cause decoding, based on the determined overall encoding padding parameter, of a physical layer data packet received from the wireless transmitter device in the allocated RU(s) (compare with step 150' of Figure 1).

To this end, the controller may comprise, or be otherwise associated with (e.g., connected, or connectable, to) a decoder (DEC; e.g., decoding circuitry or a decode module) 402. The decoder 402 may be configured to decode the physical layer data packet as described above.

As already mentioned, decoding of the physical layer data packet may comprise data decoding with removal of pre-padding and/or post-padding for one or more OFDM symbols of the physical layer data packet, wherein the determined overall encoding padding parameter is applied in the removal of pre-padding and/or the removal of post-padding.

The controller may be further configured to cause acquisition of information regarding the one or more allocated RU from the wireless transmitter device (compare with step 115' of Figure 1) and/or to cause reception of the physical layer data packet from the wireless transmitter device in the allocated RU(s) (compare with step 140' of Figure 1).

To this end, the controller may comprise, or be otherwise associated with (e.g., connected, or connectable, to) a receiver (RX; e.g., receiving circuitry or a reception module) 430. The receiver 430 may be configured to acquire the information regarding the one or more allocated RU from the wireless transmitter device as described above and/or to receive the physical layer data packet from the wireless transmitter device as described above.

Generally, when an arrangement is referred to herein, it is to be understood as a physical product; e.g., an apparatus. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device (e.g., a wireless transmitter device and/or a wireless receiver device).

Embodiments may appear within an electronic apparatus (such as a wireless communication device) comprising arrangements, circuitry, and/or logic according to any of the embodiments described herein. Alternatively or additionally, an electronic apparatus (such as a wireless communication device) may be configured to perform methods according to any of the embodiments described herein.

According to some embodiments, a computer program product comprises a tangible, or non-tangible, computer readable medium such as, for example a universal serial bus (USB) memory, a plug-in card, an embedded drive or a read only memory (ROM). Figure 5 illustrates an example computer readable medium in the form of a compact disc (CD) ROM 500. The computer readable medium has stored thereon a computer program comprising program instructions. The computer program is loadable into a data processor (PROC; e.g., data processing circuitry or a data processing unit) 520, which may, for example, be comprised in a wireless communication device 510. When loaded into the data processor, the computer program may be stored in a memory (MEM) 530 associated with or comprised in the data processor. According to some embodiments, the computer program may, when loaded into and run by the data processor, cause execution of method steps according to, for example, any of the methods illustrated in Figure 1 or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

**Claims**

1. A method for a wireless transmitter device configured for orthogonal frequency division multiplexing, OFDM, transmission to a wireless receiver device using one or more allocated resource unit, RU, wherein each RU is defined by a group of sub-carriers for transmission and associated with a constituent encoding padding parameter $N_{SD,short,i}$ assigned to the RU, wherein the one or more allocated RUs is comprised in a punctured bandwidth, the method comprising:

   providing (115) information regarding the one or more allocated RUs by signaling to the wireless receiver device;
   determining (120) an overall encoding padding parameter $N_{SD,short}$ for the one or more allocated RUs wherein when exactly one RU is allocated for transmission to the wireless receiver device, the overall encoding padding parameter $N_{SD,short}$ is determined (122) as the constituent encoding padding parameter of the allocated RU $N_{SD,short,i}$; and when more than one RUs are allocated for transmission to the wireless receiver device, the overall encoding padding parameter $N_{SD,short}$ is determined (123) as a sum of the constituent encoding padding parameters of the allocated RUs,

$$\sum_{i=1}^{r} N_{SD,short,i};$$

   and
   generating (130), based on the determined overall encoding padding parameter $N_{SD,short}$, a physical layer data packet for transmission to the wireless receiver device in the allocated RUs.

2. The method of claim 1, wherein generating the physical layer data packet comprises data encoding (133) with pre-padding (132) and/or post-padding (134) for one or more OFDM symbols of the physical layer data packet, wherein the determined overall encoding padding parameter is applied in the pre-padding and/or the post-padding.

3. The method of claim 2, wherein the one or more OFDM symbols comprise a number of last OFDM symbols of the physical layer data packet.

4. The method of any of claims 2 through 3, wherein an amount of padding for the one or more OFDM symbols is defined by the determined overall encoding padding parameter.

5. The method of any of claims 2 through 4, further comprising dividing (131) the one or more OFDM symbols into a plurality of segments based on the determined overall encoding padding parameter.

6. The method of claim 5 wherein, when the plurality of segments is less than a maximum number of segments, a number of bits after encoding in each of the one or more OFDM symbols is equal to a product of the plurality of segments, the determined overall encoding padding parameter, a number of spatial streams, and a number of encoded bits per sub-carrier per spatial stream.

7. The method of any of claims 1 through 6, wherein the transmission to a wireless receiver device using one or more RU is in accordance with an extremely high throughput scheme, and/or the constituent encoding padding parameter of at least one RU is defined in accordance with a high efficiency scheme, wherein the high efficiency, HE, scheme is as specified by IEEE 802.11ax and the extremely high throughput, EHT, scheme is as specified by IEEE 802.11be.

8. The method of any of claims 1 through 7, wherein the constituent encoding padding parameter is based on a number of sub-carriers of the corresponding RU.

9. A method for a wireless receiver device configured for orthogonal frequency division multiplexing, OFDM, reception from a transmitter receiver device using one or more allocated resource unit, RU, wherein each RU is defined by a group of sub-carriers for transmission and associated with a constituent encoding padding parameter $N_{SD,short,i}$ assigned to the RU, wherein the one or more allocated RUs is comprised in a punctured bandwidth, the method comprising:

   acquiring (115') information regarding the one or more allocated RUs by signaling from the wireless transmitter device;
   determining (120') an overall encoding padding parameter $N_{SD,short}$ for the one or more allocated RUs, wherein

when exactly one RU is allocated for transmission to the wireless receiver device, the overall encoding padding parameter $N_{SD,short,i}$ is determined (122') as the constituent encoding padding parameter of the allocated RU $N_{SD,short,i}$; and

when more than one RUs are allocated for transmission to the wireless receiver device, the overall encoding padding parameter $N_{SD,short,i}$ is determined (123') as a sum of the constituent encoding padding parameters of the allocated RUs,

$$\sum_{i=1}^{r} N_{SD,short,i};$$

and

decoding (150'), based on the determined overall encoding padding parameter $N_{SD,short}$, a physical layer data packet received from the wireless transmitter device in the allocated RUs.

10. An apparatus for a wireless transmitter device configured for orthogonal frequency division multiplexing, OFDM, transmission to a wireless receiver device using one or more allocated resource unit, RU, wherein each RU is defined by a group of sub-carriers for transmission and associated with a constituent encoding padding parameter $N_{SD,short,i}$ assigned to the RU, wherein the one or more allocated RUs is comprised in a punctured bandwidth, the apparatus comprising controlling circuitry (300) configured to cause:

provision of information regarding the one or more allocated RUs by signaling to the wireless receiver device;
determination of an overall encoding padding parameter $N_{SD,short}$ for the one or more allocated RUs as:

the constituent encoding padding parameter of the allocated RU $N_{SD,short,i}$ responsive to exactly one RU being allocated for transmission to the wireless receiver device; and
a sum of the constituent encoding padding parameters of the allocated RUs,

$$\sum_{i=1}^{r} N_{SD,short,i},$$

responsive to more than one RUs being allocated for transmission to the wireless receiver device; and

generation, based on the determined overall encoding padding parameter $N_{SD,short}$, of a physical layer data packet for transmission to the wireless receiver device in the allocated RUs.

11. The apparatus of claim 10, wherein the controlling circuitry is further configured to perform operations corresponding to any of claims 2 through 8.

12. An apparatus for a wireless receiver device configured for orthogonal frequency division multiplexing, OFDM, reception from a transmitter receiver device using one or more allocated resource unit, RU, wherein each RU is defined by a group of sub-carriers for transmission and associated with a constituent encoding padding parameter $N_{SD,short}$ for the one or more allocated RU, wherein the one or more allocated RUs is comprised in a punctured bandwidth, the apparatus comprising controlling circuitry (400) configured to cause:

acquisition of information regarding the one or more allocated RUs by signaling from the wireless transmitter device;
determination of an overall encoding padding parameter $N_{SD,short}$ for the one or more allocated RUs as:

the constituent encoding padding parameter of the allocated RU $N_{SD,short,i}$ responsive to exactly one RU being allocated for transmission to the wireless receiver device; and
a sum of the constituent encoding padding parameters of the allocated RUs

$$\sum_{i=1}^{r} N_{SD,short,i}$$

when more than one RUs are allocated for transmission to the wireless receiver device; and

decoding, based on the determined overall encoding padding parameter $N_{SD,short}$, of a physical layer data packet received from the wireless transmitter device in the allocated RUs.

**Patentansprüche**

1. Verfahren für eine drahtlose Sendervorrichtung, die zur orthogonalen Frequenzmultiplexübertragung, OFDM-Übertragung, an eine drahtlose Empfängervorrichtung unter Verwendung einer oder mehrerer zugewiesener Ressourceneinheit, RU, konfiguriert ist, wobei jede RU durch eine Gruppe von Unterträgern für die Übertragung definiert und mit einem der RU zugewiesenen Bestandteilkodierungsauffüllparameter $N_{SD,short,i}$ assoziiert ist, wobei die eine oder die mehreren RUs in einer punktierten Bandbreite umfasst ist, wobei das Verfahren Folgendes umfasst:

   Bereitstellen (115) von Informationen über die eine oder die mehreren zugewiesenen RUs durch Signalisieren an die drahtlose Empfängervorrichtung;
   Bestimmen (120) eines Gesamtkodierungsauffüllparameters $N_{SD,short}$ für die eine oder die mehreren zugewiesenen RUs, wobei,
   wenn genau eine RU für die Übertragung an die drahtlose Empfängervorrichtung zugewiesen wird, der Gesamtkodierungsauffüllparameter $N_{SD,short}$ als der Bestandteilkodierungsauffüllparameter der zugewiesenen RU $N_{SD,short,i}$ bestimmt (122) wird; und,
   wenn mehr als eine RUs für die Übertragung an die drahtlose Empfängervorrichtung zugewiesen ist, der Gesamtkodierungsauffüllparameter $N_{SD,short}$ als eine Summe der Bestandteilkodierungsauffüllparameter der zugewiesenen RUs bestimmt (123) wird,

$$\sum_{i=1}^{r} N_{SD,short,i} \text{ ;}$$

   und
   Erzeugen (130), basierend auf dem bestimmten Gesamtkodierungsauffüllparameter $N_{SD,short}$, eines Datenpakets der physikalischen Schicht für die Übertragung an die drahtlose Empfängervorrichtung in den zugewiesenen RUs.

2. Verfahren nach Anspruch 1, wobei das Erzeugen des Datenpakets der physikalischen Schicht Datenkodieren (133) mit Vorauffüllen (132) und/oder Nachauffüllen (134) für eines oder mehrere OFDM-Symbole des Datenpakets der physikalischen Schicht umfasst, wobei der bestimmte Gesamtkodierungsauffüllparameter bei dem Vorauffüllen und/oder dem Nachauffüllen angewendet wird.

3. Verfahren nach Anspruch 2, wobei das eine oder die mehreren OFDM-Symbole eine Anzahl von letzten OFDM-Symbolen des Datenpakets der physikalischen Schicht umfassen.

4. Verfahren nach einem der Ansprüche 2 bis 3, wobei ein Auffüllgrad für das eine oder die mehreren OFDM-Symbole durch den bestimmten Gesamtkodierungsauffüllparameter definiert ist.

5. Verfahren nach einem der Ansprüche 2 bis 4, ferner umfassend Aufteilen (131) des einen oder der mehreren OFDM-Symbole in eine Vielzahl von Segmenten basierend auf dem bestimmten Gesamtkodierungsauffüllparameter.

6. Verfahren nach Anspruch 5, wobei, wenn die Vielzahl von Segmenten kleiner als eine maximale Anzahl von Segmenten ist, eine Anzahl von Bits nach dem Kodieren in jedem des einen oder der mehreren OFDM-Symbole gleich einem Produkt aus der Vielzahl von Segmenten, dem bestimmten Gesamtkodierungsauffüllparameter, einer Anzahl von räumlichen Strömen und einer Anzahl von kodierten Bits pro Unterträger pro räumlichem Strom ist.

7. Verfahren nach einem der Ansprüche 1 bis 6, wobei die Übertragung an eine drahtlose Empfängervorrichtung unter Verwendung einer oder mehrerer RU gemäß einem Schema mit extrem hohem Durchsatz erfolgt und/oder der Bestandteilkodierungsauffüllparameter von mindestens einer RU gemäß einem Schema mit hoher Effizienz definiert ist, wobei das Schema mit hoher Effizienz, HE, der Spezifikation von IEEE 802.11ax entspricht und das Schema mit extrem hohem Durchsatz, EHT, der Spezifikation von IEEE 802.11be entspricht.

8. Verfahren nach einem der Ansprüche 1 bis 7, wobei der Bestandteilkodierungsauffüllparameter auf einer Anzahl von Unterträgern der entsprechenden RU basiert.

9. Verfahren für eine drahtlose Empfängervorrichtung, die zum orthogonalen Frequenzmultiplexempfang, OFDM-Empfang, von einer Senderempfängervorrichtung unter Verwendung einer oder mehrerer zugewiesener Ressourceneinheit, RU, konfiguriert ist, wobei jede RU durch eine Gruppe von Unterträgern für eine Übertragung definiert und mit einem der RU zugewiesenen Bestandteilkodierungsauffüllparameter $N_{SD,short,i}$ assoziiert ist, wobei die eine oder die mehreren RUs in einer punktierten Bandbreite umfasst ist, wobei das Verfahren Folgendes umfasst:

Erfassen (115') von Informationen über die eine oder mehreren zugewiesenen RUs durch Signalisieren von der drahtlosen Sendervorrichtung;

Bestimmen (120') eines Gesamtkodierungsauffüllparameters $N_{SD,short}$ für die eine oder die mehreren zugewiesenen RUs, wobei,

wenn genau eine RU für die Übertragung an die drahtlose Empfängervorrichtung zugewiesen wird, der Gesamtkodierungsauffüllparameter $N_{SD,short,i}$ als der Bestandteilkodierungsauffüllparameter der zugewiesenen RU $N_{SD,short,i}$ bestimmt (122') wird; und,

wenn mehr als eine RUs für die Übertragung an die drahtlose Empfängervorrichtung zugewiesen ist, der Gesamtkodierungsauffüllparameter $N_{SD,short,i}$ als eine Summe der Bestandteilkodierungsauffüllparameter der zugewiesenen RUs bestimmt (123') wird,

$$\sum_{i=1}^{r} N_{SD,short,i} \; ;$$

und

Dekodieren (150'), basierend auf dem bestimmten Gesamtkodierungsauffüllparameter $N_{SD,short}$, eines Datenpakets der physikalischen Schicht, das von der drahtlosen Sendervorrichtung in den zugewiesenen RUs empfangen worden ist.

10. Einrichtung für eine drahtlose Sendervorrichtung, die zur orthogonalen Frequenzmultiplexübertragung, OFDM-Übertragung, an eine drahtlose Empfängervorrichtung unter Verwendung einer oder mehrerer zugewiesener Ressourceneinheit, RU, konfiguriert ist, wobei jede RU durch eine Gruppe von Unterträgern für die Übertragung definiert und mit einem der RU zugewiesenen Bestandteilkodierungsauffüllparameter $N_{SD,short,i}$ assoziiert ist, wobei die eine oder die mehreren RUs in einer punktierten Bandbreite umfasst ist, wobei die Einrichtung eine Steuerschaltung (300) umfasst, die dazu konfiguriert ist, Folgendes zu veranlassen:

Bereitstellung von Informationen über die eine oder die mehreren zugewiesenen RUs durch Signalisieren an die drahtlose Empfängervorrichtung;

Bestimmung eines Gesamtkodierungsauffüllparameters $N_{SD,short}$ für die eine oder die mehreren zugewiesenen RUs wie folgt:

der Bestandteilkodierungsauffüllparameter der zugewiesenen RU $N_{SD,short,i}$ als Reaktion darauf, dass genau eine RU für die Übertragung an die drahtlose Empfängervorrichtung zugewiesen wird; und

eine Summe der Bestandteilkodierungsauffüllparameter der zugewiesenen RUs,

$$\sum_{i=1}^{r} N_{SD,short,i} \, ,$$

als Reaktion darauf, dass mehr als eine RUs für die Übertragung an die drahtlose Empfängervorrichtung zugewiesen wird; und

Erzeugung, basierend auf dem bestimmten Gesamtkodierungsauffüllparameter $N_{SD,short}$, eines Datenpakets der physikalischen Schicht für die Übertragung an die drahtlose Empfängervorrichtung in den zugewiesenen RUs.

11. Einrichtung nach Anspruch 10, wobei die Steuerschaltung ferner dazu konfiguriert ist, Vorgänge, die einem der Ansprüche 2 bis 8 entsprechen, durchzuführen.

12. Einrichtung für eine drahtlose Empfängervorrichtung, die zum orthogonalen Frequenzmultiplexempfang, OFDM-Empfang, von einer Senderempfängervorrichtung unter Verwendung einer oder mehrerer zugewiesener Ressourceneinheit, RU, konfiguriert ist, wobei jede RU durch eine Gruppe von Unterträgern für eine Übertragung definiert und mit einem Bestandteilkodierungsauffüllparameter $N_{SD,short}$ für die eine oder die mehreren zugewiesenen RU assoziiert ist, wobei die eine oder die mehreren RUs in einer punktierten Bandbreite umfasst ist, wobei die Einrichtung eine Steuerschaltung (400) umfasst, die dazu konfiguriert ist, Folgendes zu veranlassen:

Erfassung von Informationen über die eine oder die mehreren zugewiesenen RUs durch Signalisieren von der drahtlosen Sendervorrichtung;

Bestimmung eines Gesamtkodierungsauffüllparameters $N_{SD,short}$ für die eine oder die mehreren zugewiesenen RUs wie folgt:

der Bestandteilkodierungsauffüllparameter der zugewiesenen RU $N_{SD,short,i}$ als Reaktion darauf, dass genau eine RU für die Übertragung an die drahtlose Empfängervorrichtung zugewiesen wird; und eine Summe der Bestandteilkodierungsauffüllparameter der zugewiesenen RUs

$$\sum_{i=1}^{r} N_{SD,short,i} \text{ ,}$$

wenn mehr als eine RUs für die Übertragung an die drahtlose Empfängervorrichtung zugewiesen ist; und Dekodieren, basierend auf dem bestimmten Gesamtkodierungsauffüllparameter $N_{SD,short}$, eines Datenpakets der physikalischen Schicht, das von der drahtlosen Sendervorrichtung in den zugewiesenen RUs empfangen worden ist.

## Revendications

1. Procédé pour un dispositif émetteur sans fil configuré pour une transmission par multiplexage par répartition en fréquences orthogonales, OFDM, vers un dispositif récepteur sans fil en utilisant une ou plusieurs unités de ressource, RU, allouées, dans lequel chaque RU est définie par un groupe de sous-porteuses pour une transmission et associée à un paramètre de remplissage de codage constituant $N_{SD,short,i}$ attribué à la RU, dans lequel les une ou plusieurs RU allouées sont comprises dans une bande passante poinçonnée, le procédé comprenant :

la fourniture (115) d'informations concernant les une ou plusieurs RU allouées par une signalisation vers le dispositif récepteur sans fil ;
la détermination (120) d'un paramètre de remplissage de codage global $N_{SD,short}$ pour les une ou plusieurs RU allouées dans lequel lorsqu'exactement une RU est allouée pour une transmission vers le dispositif récepteur sans fil, le paramètre de remplissage de codage global $N_{SD,short}$ est déterminé (122) comme étant le paramètre de remplissage de codage constituant de la RU allouée $N_{SD,short,i}$ ; et
lorsque plus d'une RU sont allouées pour une transmission vers le dispositif récepteur sans fil, le paramètre de remplissage de codage global $N_{SD,short}$ est déterminé (123) comme étant une somme des paramètres de remplissage de codage constituants des RU allouées,

$$\sum_{i=1}^{r} N_{SD,short,i} \text{ ;}$$

et
la génération (130), sur la base du paramètre de remplissage de codage global $N_{SD,short}$ déterminé, d'un paquet de données de couche physique pour une transmission vers le dispositif récepteur sans fil dans les RU allouées.

2. Procédé selon la revendication 1, dans lequel la génération du paquet de données de couche physique comprend le codage de données (133) avec un pré-remplissage (132) et/ou un post-remplissage (134) pour un ou plusieurs symboles OFDM du paquet de données de couche physique, dans lequel le paramètre de remplissage de codage global déterminé est appliqué dans le pré-remplissage et/ou le post-remplissage.

3. Procédé selon la revendication 2, dans lequel les un ou plusieurs symboles OFDM comprennent un certain nombre de derniers symboles OFDM du paquet de données de couche physique.

4. Procédé selon l'une quelconque des revendications 2 à 3, dans lequel une quantité de remplissage pour les un ou plusieurs symboles OFDM est définie par le paramètre de remplissage de codage global déterminé.

5. Procédé selon l'une quelconque des revendications 2 à 4, comprenant en outre la division (131) des un ou plusieurs symboles OFDM en une pluralité de segments sur la base du paramètre de remplissage de codage global déterminé.

6. Procédé selon la revendication 5 dans lequel, lorsque la pluralité de segments est inférieure à un nombre maximal de segments, un nombre de bits après codage dans chacun des un ou plusieurs symboles OFDM est égal à un produit de la pluralité de segments, du paramètre de remplissage de codage global déterminé, d'un nombre de flux spatiaux, et d'un nombre de bits codés par sous-porteuse par flux spatial.

7.  Procédé selon l'une quelconque des revendications 1 à 6, dans lequel la transmission vers un dispositif récepteur sans fil en utilisant une ou plusieurs RU est conforme à un schéma à très haut débit, et/ou le paramètre de remplissage de codage constituant d'au moins une RU est défini conformément à un schéma à haute efficacité, dans lequel le schéma à haute efficacité, HE, est tel que spécifié par IEEE 802.11ax et le schéma à très haut débit, EHT, est tel que spécifié par IEEE 802.11be.

8.  Procédé selon l'une quelconque des revendications 1 à 7, dans lequel le paramètre de remplissage de codage constituant est basé sur un nombre de sous-porteuses de la RU correspondante.

9.  Procédé pour un dispositif récepteur sans fil configuré pour une réception par multiplexage par répartition en fréquences orthogonales, OFDM, provenant d'un dispositif émetteur sans fil en utilisant une ou plusieurs unités de ressource, RU, allouées, dans lequel chaque RU est définie par un groupe de sous-porteuses pour une transmission et associée à un paramètre de remplissage de codage constituant $N_{SD,short,i}$ attribué à la RU, dans lequel les une ou plusieurs RU allouées sont comprises dans une bande passante poinçonnée, le procédé comprenant :

    l'acquisition (115') d'informations concernant les une ou plusieurs RU allouées par une signalisation provenant du dispositif émetteur sans fil ;
    la détermination (120') d'un paramètre de remplissage de codage global $N_{SD,short}$ pour les une ou plusieurs RU allouées dans lequel lorsqu'exactement une RU est allouée pour une transmission vers le dispositif récepteur sans fil, le paramètre de remplissage de codage global $N_{SD,short,i}$ est déterminé (122') comme étant le paramètre de remplissage de codage constituant de la RU allouée $N_{SD,short,i}$ ; et
    lorsque plus d'une RU sont allouées pour une transmission vers le dispositif récepteur sans fil, le paramètre de remplissage de codage global $N_{SD,short,i}$ est déterminé (123') comme étant une somme des paramètres de remplissage de codage constituants des RU allouées,

    $$\sum_{i=1}^{r} N_{SD,short,i} \; ;$$

    et
    le décodage (150'), sur la base du paramètre de remplissage de codage global $N_{SD,short}$ déterminé, d'un paquet de données de couche physique reçu provenant du dispositif émetteur sans fil dans les RU allouées.

10. Appareil pour un dispositif émetteur sans fil configuré pour une transmission par multiplexage par répartition en fréquences orthogonales, OFDM, vers un dispositif récepteur sans fil en utilisant une ou plusieurs unités de ressource, RU, allouées, dans lequel chaque RU est définie par un groupe de sous-porteuses pour une transmission et associée à un paramètre de remplissage de codage constituant $N_{SD,short,i}$ attribué à la RU, dans lequel les une ou plusieurs RU allouées sont comprises dans une bande passante poinçonnée, l'appareil comprenant un circuit de commande (300) configuré pour amener :

    la fourniture d'informations concernant les une ou plusieurs RU allouées par une signalisation vers le dispositif récepteur sans fil ;
    la détermination d'un paramètre de remplissage de codage global $N_{SD,short}$ pour les une ou plusieurs RU allouées comme étant :

    le paramètre de remplissage de codage constituant de la RU allouée $N_{SD,short,i}$ en réponse au fait qu'exactement une RU est allouée pour une transmission vers le dispositif récepteur sans fil ; et
    une somme des paramètres de remplissage de codage constituants des RU allouées,

    $$\sum_{i=1}^{r} N_{SD,short,i} \; ,$$

    en réponse au fait que plus d'une RU sont allouées pour une transmission vers le dispositif récepteur sans fil ; et
    la génération, sur la base du paramètre de remplissage de codage global $N_{SD,short}$ déterminé, d'un paquet de données de couche physique pour une transmission vers le dispositif récepteur sans fil dans les RU allouées.

11. Appareil selon la revendication 10, dans lequel le circuit de commande est en outre configuré pour réaliser des opérations correspondant à l'une quelconque des revendications 2 à 8.

**12.** Appareil pour un dispositif récepteur sans fil configuré pour une réception par multiplexage par répartition en fréquences orthogonales, OFDM, provenant d'un dispositif émetteur-récepteur en utilisant une ou plusieurs unités de ressource, RU, allouées, dans lequel chaque RU est définie par un groupe de sous-porteuses pour une transmission et associée à un paramètre de remplissage de codage constituant $N_{SD,short}$ pour les une ou plusieurs RU allouées, dans lequel les une ou plusieurs RU allouées sont comprises dans une bande passante poinçonnée, l'appareil comprenant un circuit de commande (400) configuré pour amener :

l'acquisition d'informations concernant les une ou plusieurs RU allouées
par une signalisation provenant du
dispositif émetteur sans fil ;
la détermination d'un paramètre de remplissage de codage global $N_{SD,short}$ pour les une ou plusieurs RU allouées comme étant :

le paramètre de remplissage de codage constituant de la RU allouée $N_{SD,short,i}$ en réponse au fait qu'exactement une RU est allouée pour une transmission vers le dispositif récepteur sans fil ; et
une somme des paramètres de remplissage de codage constituants des RU allouées

$$\sum_{i=1}^{r} N_{SD,short,i} \, ,$$

lorsque plus d'une RU sont allouées pour une transmission vers le dispositif récepteur sans fil ; et
le décodage, sur la base du paramètre de remplissage de codage global $N_{SD,short}$, déterminé, d'un paquet de données de couche physique reçu provenant du dispositif émetteur sans fil dans les RU allouées.

_100_

_100'_

```
┌ ─ ─ ─ ─ ─ ─ ─ ─ ─ ─ ─ ─ ─ ─ ┐
│            110               │
│     Acquire RU allocation    │
└ ─ ─ ─ ─ ─ ─ ─ ─ ─ ─ ─ ─ ─ ─ ┘
               │
               ▼
┌ ─ ─ ─ ─ ─ ─ ─ ─ ─ ─ ─ ─ ─ ─ ┐         ┌ ─ ─ ─ ─ ─ ─ ─ ─ ─ ─ ─ ─ ─ ─ ─ ─ ┐
│            115               │         │            115'                  │
│  Provide information regarding RU │ ─ ─▶│     Acquire RU allocation        │
│    allocation to receiver    │         └ ─ ─ ─ ─ ─ ─ ─ ─ ─ ─ ─ ─ ─ ─ ─ ─ ┘
└ ─ ─ ─ ─ ─ ─ ─ ─ ─ ─ ─ ─ ─ ─ ┘                          │
               │                                          ▼
               ▼
```

┌─────────────────────────────────────┐       ┌─────────────────────────────────────┐
│                120                  │       │                120'                 │
│  Determine overall encoding padding │       │  Determine overall encoding padding │
│             parameter               │       │             parameter               │
│  ┌ ─ ─ ─ ─ ─ ─ ─ ─ ─ ─ ─ ─ ─ ─ ┐    │       │  ┌ ─ ─ ─ ─ ─ ─ ─ ─ ─ ─ ─ ─ ─ ─ ┐    │
│  │            122              │    │       │  │            122'             │    │
│  │  Equal to constituent encoding │ │       │  │  Equal to constituent encoding │ │
│  │ padding parameter of allocated RU │       │  │ padding parameter of allocated RU │
│  └ ─ ─ ─ ─ ─ ─ ─ ─ ─ ─ ─ ─ ─ ─ ┘    │       │  └ ─ ─ ─ ─ ─ ─ ─ ─ ─ ─ ─ ─ ─ ─ ┘    │
│              =1 ▲                    │       │              =1 ▲                    │
│  ◀ ─ ─ ─ ◇   121   ◇ ─ ─ ─ ▶        │       │  ◀ ─ ─ ─ ◇   121'  ◇ ─ ─ ─ ▶        │
│          Nbr of RU:s?               │       │          Nbr of RU:s?               │
│             >1 ▼                    │       │             >1 ▼                    │
│  ┌ ─ ─ ─ ─ ─ ─ ─ ─ ─ ─ ─ ─ ─ ─ ┐    │       │  ┌ ─ ─ ─ ─ ─ ─ ─ ─ ─ ─ ─ ─ ─ ─ ┐    │
│  │            123              │    │       │  │            123'             │    │
│  │    Equal to sum of constituent │ │       │  │    Equal to sum of constituent │ │
│  │  encoding padding parameters of │       │  │  encoding padding parameters of │
│  │        allocated RU:s       │    │       │  │        allocated RU:s       │    │
│  └ ─ ─ ─ ─ ─ ─ ─ ─ ─ ─ ─ ─ ─ ─ ┘    │       │  └ ─ ─ ─ ─ ─ ─ ─ ─ ─ ─ ─ ─ ─ ─ ┘    │
└─────────────────────────────────────┘       └─────────────────────────────────────┘
               │                                          │
               ▼                                          │
┌─────────────────────────────────────┐                  │
│                130                  │                  │
│  Generate physical layer data packet based │          │
│   on overall encoding padding parameter │              │
│  ┌ ─ ─ ─ ─ ─ ─ ─ ─ ─ ─ ─ ─ ─ ─ ┐    │                  │
│  │            131              │    │                  │
│  │   Dividing OFDM symbol(s) into │ │                  │
│  │            segments         │    │                  │
│  └ ─ ─ ─ ─ ─ ─ ─ ─ ─ ─ ─ ─ ─ ─ ┘    │                  │
│              ▼                      │                  │
│  ┌ ─ ─ ─ ─ ─ ─ ─ ─ ─ ─ ─ ─ ─ ─ ┐    │                  │
│  │            132              │    │                  │
│  │          Pre-padding        │    │                  │
│  └ ─ ─ ─ ─ ─ ─ ─ ─ ─ ─ ─ ─ ─ ─ ┘    │                  │
│              ▼                      │                  │
│  ┌ ─ ─ ─ ─ ─ ─ ─ ─ ─ ─ ─ ─ ─ ─ ┐    │                  │
│  │            133              │    │                  │
│  │           Encoding          │    │                  │
│  └ ─ ─ ─ ─ ─ ─ ─ ─ ─ ─ ─ ─ ─ ─ ┘    │                  │
│              ▼                      │                  ▼
│  ┌ ─ ─ ─ ─ ─ ─ ─ ─ ─ ─ ─ ─ ─ ─ ┐    │       ┌ ─ ─ ─ ─ ─ ─ ─ ─ ─ ─ ─ ─ ─ ─ ─ ─ ┐
│  │            134              │    │       │            140'                  │
│  │          Post-padding       │    │   ─ ─▶│     Receive physical layer packet │
│  └ ─ ─ ─ ─ ─ ─ ─ ─ ─ ─ ─ ─ ─ ─ ┘    │       └ ─ ─ ─ ─ ─ ─ ─ ─ ─ ─ ─ ─ ─ ─ ─ ─ ┘
└─────────────────────────────────────┘                  │
               │                                          ▼
               ▼                              ┌─────────────────────────────────────┐
┌ ─ ─ ─ ─ ─ ─ ─ ─ ─ ─ ─ ─ ─ ─ ┐              │                150'                 │
│            140               │              │  Decode physical layer data packet based │
│  Transmit generated physical layer packet │ │   on overall encoding padding parameter │
└ ─ ─ ─ ─ ─ ─ ─ ─ ─ ─ ─ ─ ─ ─ ┘              └─────────────────────────────────────┘

# FIG. 1

FIG. 2

FIG. 3    FIG. 4    FIG. 5

**REFERENCES CITED IN THE DESCRIPTION**

**Patent documents cited in the description**

- WO 2017122240 A1
- WO 2017075227 A1

- EP 3748883 A1

**Non-patent literature cited in the description**

- **HONGYUAN ZANG et al.** HE PHY Padding and Packet Extension. *doc.:IEEE 802.11-15/0810*, September 2015